Europäisches Patentamt

European Patent Office

Office européen des brevets

(19)

(11) Veröffentlichungsnummer: **0 043 894**
**B1**

(12) # EUROPÄISCHE PATENTSCHRIFT

(45) Veröffentlichungstag der Patentschrift:
**23.11.83**

(21) Anmeldenummer: **81102892.7**

(22) Anmeldetag: **15.04.81**

(51) Int. Cl.³: **B 60 T 8/22**

(54) **Lastabhängig gesteuerte Bremskraftregeleinrichtung.**

(30) Priorität: **11.07.80 DE 3026252**

(43) Veröffentlichungstag der Anmeldung:
**20.01.82 Patentblatt 82/3**

(45) Bekanntmachung des Hinweises auf die Patenterteilung:
**23.11.83 Patentblatt 83/47**

(84) Benannte Vertragsstaaten:
**DE FR GB IT NL SE**

(56) Entgegenhaltungen:
**DE - A - 2 706 758**
**DE - A - 2 814 421**
**DE - B - 2 646 288**
**DE - B - 2 739 884**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Reinecke, Erich, Kastanieneck 6, D-3167 Burgdorf (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

EP 0 043 894 B1

ACTORUM AG

Lastabhängig gesteuerte Bremskraft-Regeleinrichtung

Die Erfindung betrifft eine lastabhängig gesteuerte Bremskraft-Regeleinrichtung für druckluftbetätigbare Anhängerfahrzeug-Bremsanlagen, gemäss dem Oberbegriff des Anspruchs 1.

Durch die DE-AS 26 46 288 ist eine andere Bremskraft-Regeleinrichtung bekannt, deren Bauweise derart ist, dass die lastabhängige Regelung des Bremsdruckes hinter dem Relaisventil stattfindet.

Diese Einrichtung erfüllt die in den EG-Richtlinien festgelegten Anforderungen sowohl bezüglich der Ansprech- und Schwellzeiten, als auch bezüglich einer Notbremsung bei Abriss der Anhänger-Vorratsleitung.

Durch diese bekannte Bremskraft-Regeleinrichtung werden weiterhin die in den EG-Richtlinien hinsichtlich der Einhaltung von Reibungskurven enthaltenen Vorschriften erfüllt, welche die Abhängigkeit von Abbremsung und Haftreibwert festlegen und den Einbau von automatischlastabhängigen Bremskraftreglern in Nutzfahrzeugen erfordern.

Die erwähnte bekannte Bremskraft-Regeleinrichtung stellt zwar ein Gerät dar, das neben den beschriebenen Funktionen praktisch auch die Funktion eines Anhänger-Bremsventils erfüllt. Die hierzu notwendigen baulichen Massnahmen wirken sich jedoch auf die Abmessungen des Gerätes so aus, dass ein grosses Gehäuse erforderlich ist. Die Erzielung von kurzen Be- und Entlüftungszeiten erfordern nämlich grosse Querschnitte am kombinierten Regel-Relaisventil, insbesondere für den Entlüftungsvorgang. Grosse Querschnitte wiederum erfordern grosse Bauabmessungen, was wiederum wegen der erheblichen Druckbeaufschlagung grössere Betätigungskräfte am Stössel und somit eine stärkere Bauweise der Bauteile erfordert. Eine verhältnismässig grosse Bauhöhe bei Verwendung dieser an sich vorteilhaften Ventileinrichtung als Anhänger-Bremsventil ergibt sich ausserdem dadurch, dass die Notschalteinrichtung, welche be Abriss der Anhänger-Vorratsleitung in Aktion tritt, praktisch auf die Ventileinrichtung aufgesetzt ist.

Der Erfindung liegt deshalb die Aufgabe zugrunde, eine Bremskraft-Regeleinrichtung für Anhängerfahrzeuge der eingangs erwähnten Art zu schaffen, deren Bauweise kompakt ist und welche sämtliche beschriebene Funktionen der bekannten Regeleinrichtung erfüllt.

Diese Aufgabe wir durch die im Patentanspruch 1 angegebene Erfindung gelöst.

Bei der erfindungsgemässen Lösung wird von einem vorteilhaften Aufbau der lastabhängigen Bremskraftregeleinrichtung ausgegangen, wie sie grundsätzlich durch die DE-BZ-27 39 884 vorbekannt ist. Diese vorbekannte Bremskraft-Regeleinrichtung ist jedoch nicht für die Verwendung als Anhänger-Bremsventil vorgesehen oder geeignet.

Die im Anspruch 1 vorgeschlagene besondere Integration der Notschalteinrichtung in einer nach der DE-BZ-27 39 884 aufgebauten Regeleinrichtung ohne bedeutende Vergrösserung des Gehäuses, wobei lediglich eine zusätzliche Anschlussöffnung am Gehäuse geschaffen werden musste, ergibt eine kompakte und handliche Ventileinheit, deren Aussenabmessungen verhältnismässig klein sind.

Die DE-A-2706758 zeigt eine dem Anmeldungsgegenstand ähnliche Bremskraftregeleinrichtung mit einem Notbremsventil. Hier ist der Notbremskolben jedoch im oberen Gehäuseteil angeordnet und dient nicht als Ventilsitz für das Auslassventil des Relaisventils.

Da die Notschalteinrichtung gemäss Anspruch 1 am Relaisteil im unteren Gehäuseteil und also nicht am lastabhängigen Regelteil liegt, kann das Regelventil des lastabhängigen Regelteils feinfühlig gesteuert werden. Andernfalls würde der Notbremskolben der Notschalteinrichtung die Feinfühligkeit des lastabhängigen Regelventils beeinträchtigen.

Vorteilhafte Ausgestaltungen und Weiterbildungen der Erfindung sind den Unteransprüchen zu entnehmen.

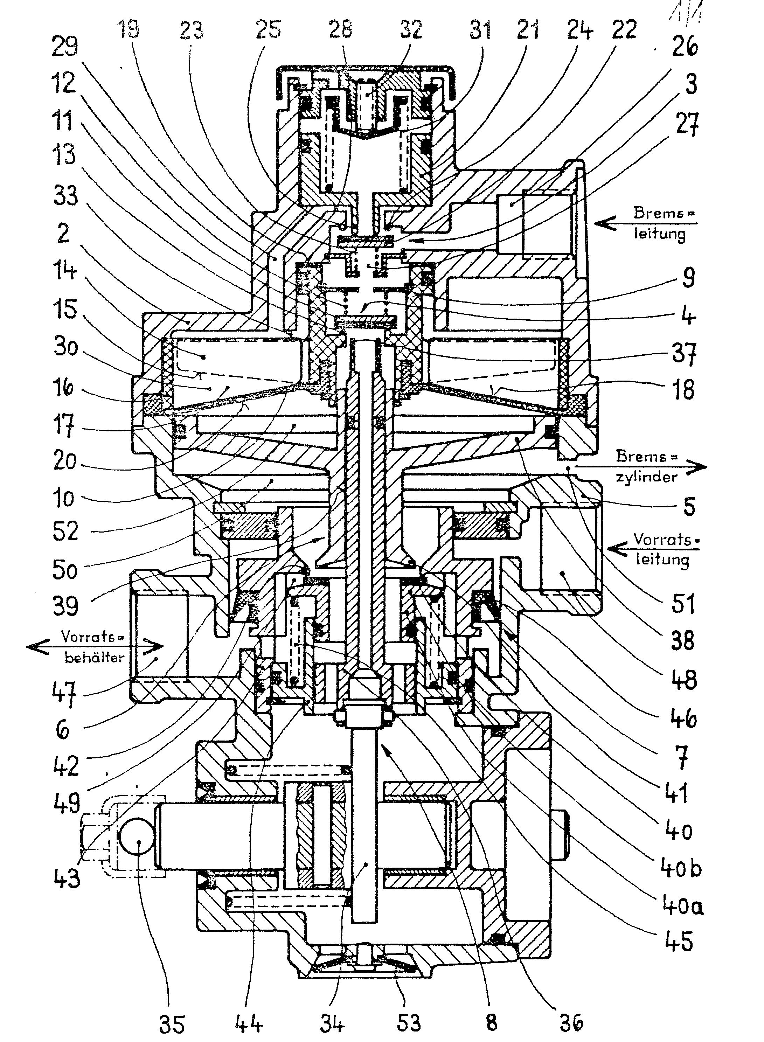

Die Erfindung wird nachfolgend anhand eines Ausführungsbeispiels, das in der Zeichnung dargestellt ist, näher erläutert.

Im oberen Gehäuseteil 2 sind ein Vorsteuerventil 3 und ein lastabhängiges Bremsdruckregelventil 4 angeordnet. Im unteren Gehäuseteil 5 befindet sich ein Relaisventil 6, eine Notschalteinrichtung 7 und eine lastabhängig verstellbare Stellvorrichtung 8 für das Bremsdruckregelventil 4.

Das Bremsdruckregelventil 4 weist einen als Stufenkolben ausgebildeten Bremsdruckregelkolben 9, 10 auf, der aus einem Kolben 9 und aus einer Membran 10 besteht. Im Innenraum des Kolbens 9 ist ein hohler Doppelventilkörper 11 angeordnet, der unter der Spannung einer Feder 12 steht und mit einem am Kolben 9 ausgebildeten Ventilsitz 13 ein Einlassventil 11, 13 bildet. Mit dem Kolben 9 ist eine Anzahl radialer Rippen 14 verbunden, deren der Membran 10 zugewandte Stirnfläche 15 Teile eines Kegelmantels bilden.

Im Gehäuseteil 2 ist ein Einlegering 16 mit einer Anzahl radialer feststehender Rippen 17 vorgesehen, in deren Zwischenräume die Rippen 14 berührungslos eingreifen und deren der Membran 10 zugewandten Stirnflächen 18 Teile eines entgegengesetzt verlaufenden Kegelmantels bilden.

Der Stufenkolben 9, 10 weist eine obere konstante Wirkfläche 19 und eine untere mit der Bewegung des Stufenkolbens veränderliche Wirkfläche auf.

Das Vorsteuerventil 3 besteht aus einem Vorsteuerkolben 21, einem Doppelventilkörper 22, der durch eine Feder 23 vorgespannt ist. Der Doppelventilkörper 22 bildet mit einem gehäusefesten Sitz 24 ein Einlassventil 22, 24 und mit der als Ventilsitz 25 ausgebildeten unteren Fläche des Vorsteuerkolbens 21 ein Auslassventil 22, 25.

Im oberen Gehäuseteil 2 ist ein mit der Anhänger-Bremsleitung verbindbarer Anschluss 26 vorgesehen, welcher über eine Kammer und das Einlassventil 22, 24 mit einer Vorsteuerkammer 28 in Verbindung steht. Die Vorsteuerkammer 28 steht über eine Bohrung 29 direkt mit einer oberhalb der Membran 10 befindlichen Kammer 30 in Verbindung.

Der Vorsteuerkolben 21 steht unter der Spannung einer Feder 31, mit deren Hilfe der «Einsprung» mittels einer Stellschraube 32 einstellbar ist.

Die Bewegung des Bremsdruckregelkolbens 9, 10 wird durch den Einlegering 16 begrenzt, der hier als Anschlag 33 für den Kolben 9 dient.

Die im unteren Gehäuseteil 5 angeordnete Stellvorrichtung 8 besteht im wesentlichen aus einer Kurvenscheibe 34, die von einem lastabhängig verstellbaren Stellhebel 35 bewegt wird. Die Kurvenscheibe 34 betätigt einen teilweisen hohlen Stössel 36. Das obere Ende des Stössels 36 ist als Ventilsitz 37 ausgebildet und bildet mit dem Doppelventilkörper 11 ein Auslassventil 11, 37.

Das Relaisventil 6 umfasst einen Relaiskolben 38, der eine zentrale Bohrung 39 aufweist, durch die der Stössel 36 zur lastabhängigen Einstellung des Bremsdruckregelventils 4 dichtend hindurchgeführt ist. Das Relaisventil 6 weist ferner einen Doppelventilkörper 40 auf, der zusammen mit einem am unteren Ende des Relaiskolbens 36 ausgebildeten Sitz 41 ein Auslassventil 40, 41 und mit dem Sitz 42 eines im unteren Gehäuseteil 5 geführten Notbremskolbens 43 ein Einlassventil 40, 42 bildet. Eine hülsenförmige Ausbildung 40a des Doppelventilkörpers 40 wird abgedichtet in einem im Innendurchmesser des Notbremskolbens 43 seinerseits abgedichtet geführten Kolbenringglied 44 geführt, wobei eine zwischen einer tellerförmigen Ausbildung 40b des Doppelventilkörpers 40 und dem Kolbenringglied 44 angeordnete Feder 45 den Doppelventilkörper 40 gegen den Einlassventilsitz 42 drückt. Eine zwischen der Fläche des Aussendurchmessers des Notbremskolbens 43 und der Fläche des Gehäuseinnendurchmessers angeordneter Lippenring 46 dichtet die Flächen in einer Richtung ab, während in der anderen Richtung die Ringlippe des Lippenringes 46 den Durchfluss freigibt.

Im unteren Gehäuseteil 5 ist ein Anschluss 47 für einen nicht dargestellten Vorratsbehälter vorgesehen, dessen Befüllung über einen Anschluss 48 über den Lippenring 46 erfolgt. Weiterhin steht der Anschluss 47 über eine Kammer 49 das Einlassventil 40, 42 und eine Kammer mit einem Ausgangsanschluss 51, der zu nicht dargestellten Bremszylindern führt, in Verbindung.

Oberhalb des Relaiskolbens 38 befindet sich eine Kammer 52, die über das Einlassventil 11, 13 mit dem Steuerdruck beaufschlagbar ist.

Die Entlüftung des Relaisventils 6 erfolgt über das Auslassventil 40, 41 und den hohlen Doppelventilkörper 40, 40a, 40b an der Kurvenscheibe 34 vorbei, über ein Entlüftungsventil 53 in die Atmosphäre.

Die Entlüftung des Bremsdruckregelventils 4 und des Vorsteuerventils 3 erfolgt über den teilweise hohlen Stössel 36 und eine Querbohrung im Stössel 36 in den Entlüftungsraum des Relaisventils 6.

Der Kolben 9 ist direkt auf dem Relaiskolben 38 geführt, so dass die Belüftung der Kammer 52 über den Führungsspalt zwischen Kolben 9 und dem Relaiskolben 38 erfolgt.

Die Funktion der Bremskraft-Regeleinrichtung ist wie folgt: Die mit der Bremsanlage des Motorfahrzeugs verbundene Bremsanlage des Anhängerfahrzeugs wird über die Anhänger-Bremsleitung bei einer Bremsbetätigung des Motorwagen-Bremsventils gesteuert und über die Anhänger-Vorratsleitung aufgefüllt. Die Auffüllung der Anhänger-Bremsanlage bzw. deren Vorratsbehälter vollzieht sich durch die Bremskraft-Regeleinrichtung, und zwar über deren Anschlüsse 48, 47, wobei der Lippenring 46 die Vorratsluft in dieser Strömungsrichtung durchströmen lässt.

Bei einer Bremsbetätigung des Motorwagen-Bremsventils wird der Bremssteuerdruck über den Anschluss 26 gleichzeitig über die Kammer 27 und das Einlassventil 22, 24 in die Vorsteuerkammer 28 und über die Bohrung 29 in die Kammer 30 oberhalb der Membran 10 eingesteuert.

Beim Erreichen eines bestimmten, auf den Vorsteuerkolben 21 wirkenden Bremssteuerdruckes, bewegt sich der Vorsteuerkolben 21 gegen die Kraft der Feder 31 nach oben, wodurch das Einlassventil 22, 24 schliesst.

Gleichzeitig wirkt der Bremssteuerdruck in der Kammer 27 auf die Oberseite des Kolbens 9 – wie bereits erläutert – auf die Oberseite der Membran 10 und damit auf den Stufenkolben des Bremsdruckregelventils 4 und drückt diesen hinunter, der Doppelventilkörper 11 folgt dieser Bewegung unter dem Einfluss der Feder 12, setzt sich auf die als Auslassventilsitz 37 ausgebildete Stirnfläche des Stössels 36 und verschliesst somit das Auslassventil 11, 37 und öffnet bei weiterem Hinabgehen des Bremsdruckregelkolbens 9, 10 das Einlassventil 11, 13. Der über den Anschluss 26 anstehende Bremssteuerdruck wird nun über das Einlassventil 11, 13 am Führungsspalt zwischen dem Kolben 9 und dem Relaiskolben 38 vorbei, in die Kammer 52 oberhalb des Relaiskolbens 38 eingesteuert. Der Relaiskolben 38 wird daraufhin nach unten bewegt und schliesst mit seinem Sitz 41 das Auslassventil 40, 41 und öffnet bei der weiteren Abwärtsbewegung das Einlassventil 40, 42, so dass Druckluft über den Anschluss 47 aus dem Vorratsbehälter in die Kammer 50 und über den Anschluss 51 in die Bremszylinder strömen kann.

Unterhalb des Relaiskolbens 38 baut sich der Druck vom Vorratsbehälter auf und bewegt beim Übersteigen des Druckes in Kammer 52 oberhalb des Relaiskolbens 38 diesen wieder nach oben und schliesst das Einlassventil 40, 42, wodurch eine Bremsabschlussstellung erreicht ist. Der jetzt in den Bremszylindern herrschende Druck entspricht dem in Abhängigkeit vom Beladungsgewicht über das Bremsdruckregelventil 4 geregelten Druck.

Nach Beendigung des Bremsvorganges baut sich der Bremssteuerdruck wieder ab, wodurch der Relaiskolben 38 und der Kolben 9 in die jeweils obere Endlage bewegt werden und zugleich die Auslassventile 11, 37 und 40, 41 des Bremsdruckregelventils bzw. Relaisventils geöffnet werden; diese Druckluft kann nunmehr über das Entlüftungsventil 53 in die Atmosphäre entweichen.

Bei einem Abreissen der an den Anschluss 48 angeschlossenen Anhänger-Vorratsleitung werden die oberen Flächen des Notbremskolbens 43 druckentlastet und der auf die unteren Flächen des Notbremskolbens 43 wirkende in der Anlage bzw. im Vorratsbehälter noch vorhandene Druck bewegt den Notbremskolben 43 unter Mitnahme des Kolbenringgliedes 44 nach oben. Diese Aufwärtsbewegung wird durch die Feder 45 auf den Doppelventilkörper 40, 40b übertragen, so dass der Ventilsitz 41 des Relaiskolbens 38 mit dem Doppelventilkörper 40 in Eingriff kommend das Auslassventil 40, 41 schliesst. Bei der weiteren Aufwärtsbewegung des Notbremskolbens 43 wird das Einlassventil 40, 42 geöffnet und das Anhängefahrzeug wird von dem in der Anlage bzw. im Vorratsbehälter noch vorhandenen Vorratsdruck gebremst. Die Bedingungen einer Anhänger-Notbremseinrichtung bei Abriss der Anhänger-Vorratsleitung sind somit erfüllt.

**Patentansprüche**

1. Lastabhängig gesteuerte Bremskraft-Regeleinrichtung für druckluftbetätigbare Anhängerfahrzeug-Bremsanlagen, die folgende Merkmale umfasst:

a) Die Bremskraft-Regeleinrichtung enthält einen Bremsdruck-Regelkolben (9, 10);

b) dem Bremsdruck-Regelkolben (9, 10) ist ein Bremsdruck-Regelventil (4) zugeordnet, welches aus einem Einlassventil (11, 13) und aus einem Auslassventil 11, 37) besteht;

c) ein im Bremsdruck-Regelkolben (9, 10) angeordneter erster Doppelventilkörper (11) bildet mit einem am Regelkolben (9) vorgesehenen Ventilsitz (13) das Einlassventil (11, 13);

d) der erste Doppelventilkörper (11) bildet mit der oberen Fläche (37) eines mit einem axialen Entlüftungskanal versehenen, in Abhängigkeit von der Fahrzeugbelastung axial verstellbaren Stössel (36) das Auslassventil (11, 37), wobei der erste Doppelventilkörper (11) mit Hilfe des Stössels (36) unter gleichzeitigem Absperren des Entlüftungskanals von seinem Sitz (13) abhebbar ist;

e) ein im gleichen Gehäuse angeordnetes, dem Bremsdruck-Regelventil (4) nachgeschaltetes Relaisventil (6) stellt über ein Einlassventil (40, 42) die Verbindung zwischen dem Anhänger-Vorratsbehälter und den Radbremszylindern her, während ein Auslassventil (40, 41) für die Entlüftung der Anhänger-Bremsanlage vorgesehen ist;

f) das Relaisventil (6) ist durch einen koaxial unter dem Regelkolben (9, 10) angeordneten Relaiskolben (38) betätigbar;

g) der lastabhängig verstellbare Stössel (36) ist durch den Relaiskolben (38) koaxial und abgedichtet geführt, gekennzeichnet durch folgende Merkmale:

h) ein im unteren Gehäuseteil (5) geführter Notbremskolben (43) ist derart angeordnet, dass er als Ventilsitz (42) für das Auslassventil (40, 42) des Relaisventils (6) dient.

2. Lastabhängig gesteuerte Bremskraft-Regeleinrichtung nach Anspruch 1, gekennzeichnet durch folgendes Merkmal:

Der im unteren Gehäuseteil (5) geführte Notbremskolben (43) ist zwischen Relaiskolben (38) und lastabhängiger Verstelleinrichtung angeordnet.

3. Lastabhängig gesteuerte Bremskraft-Regeleinrichtung nach Anspruch 1, gekennzeichnet durch folgendes Merkmal:

Der lastabhängig verstellbare Stössel (36) ist koaxial durch den Notbremskolben (43) hindurch geführt.

4. Lastabhängig gesteuerte Bremskraft-Regeleinrichtung nach Anspruch 1, gekennzeichnet durch folgendes Merkmal:

Als Bremsdruck-Regelkolben (9, 10) ist ein aus einem Kolben (9) und aus einer mit dem Kolben (9) verbundene Membran (10) mit veränderlicher Wirkfläche bestehender Stufenkolben vorgesehen, dessen Oberseite mit dem Bremssteuerdruck beaufschlagbar ist.

5. Lastabhängig gesteuerte Bremskraft-Regeleinrichtung nach Ansprüchen 1 und 2, gekennzeichnet durch folgendes Merkmal:

Die Beaufschlagung der Oberseite (18) der Membran (10) des Bremsdruck-Regelkolbens (9, 10) mit dem Bremssteuerdruck ist durch die Funktion eines vorgeschalteten Steuerventils (3) abschaltbar.

6. Lastabhängig gesteuerte Bremskraft-Regeleinrichtung nach Anspruch 5, gekennzeichnet durch folgendes Merkmal:

Das vorgeschaltete Steuerventil (3) ist koaxial oberhalb des Bremsdruck-Regelventils (4) angeordnet.

7. Lastabhängig gesteuerte Bremskraft-Regeleinrichtung nach Anspruch 1, gekennzeichnet durch folgendes Merkmal:

Als gemeinsames Ventilglied für das Ein- und Auslassventil (40, 42; 40, 41) des Relaisventils (6) ist ein zweiter Doppelventilkörper (40) vorgesehen.

8. Lastabhängig gesteuerte Bremskraft-Regeleinrichtung nach Anspruch 1, gekennzeichnet durch folgendes Merkmal:

Der Relaiskolben (38) ist in Öffnungsrichtung des Relaisventils (6) von dem lastabhängig eingestellten Ausgangsdruck des Regelkolbens (9, 10) und in Gegenrichtung vom Druck der zu den Radbremszylindern ausgesteuerten Druck beaufschlagbar.

9. Lastabhängig gesteuerte Bremskraft-Regeleinrichtung nach wenigstens einem der vorhergehenden Ansprüche, gekennzeichnet durch folgendes Merkmal:

Der lastabhängig verstellbare Stössel (36) ist durch den zweiten Doppelventilkörper (40, 40a, 40b) des Relaisventils (6) koaxial geführt.

10. Lastabhängig gesteuerte Bremskraft-Regeleinrichtung nach wenigstens einem der vorhergehenden Ansprüche, gekennzeichnet durch folgendes Merkmal:

Der Notbremskolben (43) dient als Ventilsitz (42) für den zweiten Doppelventilkörper (40).

11. Lastabhängig gesteuerte Bremskraft-Regeleinrichtung nach wenigstens einem der vorhergehenden Ansprüche, gekennzeichnet durch folgendes Merkmal:

Der zweite Doppelventilkörper (40) ist im Notbremskolben (43) abgedichtet geführt.

12. Lastabhängig gesteuerte Bremskraft-Regeleinrichtung nach wenigstens einem der vorhergehenden Ansprüche, gekennzeichnet durch folgendes Merkmal:

Der zweite Doppelventilkörper (40) wird mit einer hülsenförmigen Ausbildung (40a) in einem zwischen dieser hülsenförmigen Ausbildung (40a) und dem Notbremskolben (43) angeordneten Kolbenringglied (44) abgedichtet geführt.

13. Lastabhängig gesteuerte Bremskraft-Regeleinrichtung nach wenigstens einem der vorhergehenden Ansprüche, gekennzeichnet durch folgendes Merkmal:

Der zweite Doppelventilkörper (40) ist mittels einer zwischen einer tellerförmigen Ausbildung (40b) des zweiten Doppelventilkörpers (40) und dem Kolbenringglied (44) angeordneten Feder (45) in Schliessrichtung des Einlassventils (40, 42) des Relaisventils (6) vorgespannt.

14. Lastabhängig gesteuerte Bremskraft-Regeleinrichtung nach wenigstens einem der vorhergehenden Ansprüche, gekennzeichnet durch folgendes Merkmal:

Ein mit der Anhänger-Vorratsleitung verbundener zusätzlicher Gehäuseanschluss (48) stellt über einen zwischen dem Notbremskolben (43) und dem Gehäuse (5) angeordneten, sich in einer Strömungsrichtung öffnenden Lippenring (46) eine Verbindung mit dem zum Vorratsbehälter führenden Gehäuseanschluss (47) her.


**Revendications**

1. Dispositif de réglage de l'effort de freinage commandé en fonction de la charge pour freins à air comprimé de remorques, ayant les particularités suivantes:

a) il contient un piston de réglage de l'effort de freinage (9, 10);

b) le piston de réglage de l'effort de freinage (9, 10) est conjugué à un robinet de réglage de la pression de freinage (4) qui est constitué d'une soupape d'admission (11, 13) et d'une soupape d'échappement (11, 37);

c) un premier clapet double (11), disposé dans le piston de réglage de l'effort de freinage (9, 10), constitue la sou d'admission (11, 13) avec un siège (13) prévu sur le piston de réglage (9);

d) le premier clapet double (11) constitue la soupape d'échappement (11, 37) avec la face supérieure (37) d'un poussoir (36) qui est déplaçable axialement en fonction de la charge du véhicule et est pourvu d'un canal axial de mise à l'échappement, le premier clapet double (11) pouvant être levé de son siège au moyen du poussoir (36), de qui ferme en même temps le canal de mise à l'échappement de ce pousoir;

e) un robinet relais 6, prévu en aval du robinet (4) de réglage de la pression de freinage et disposé dans le même corps, établit la liaison entre le réservoir à air comprimé de la remorque et les cylindres de frein de roue à travers une soupape d'admission (40, 42), tandis qu'une soupape d'échappement (40, 41) est prévue pour la mise à l'échappement du frein de la remorque;

f) le robinet relais (6) peut être actionné par un piston relais (38) disposé coaxialement sous le piston de réglage (9, 10);

g) le poussoir (36) déplaçable en fonction de la charge est guidé coaxialement et à joint étanche par le piston relais (38), caractérisé en ce que:

h) un piston de freinage de secours (43), guidé dans la partie inférieure (5) du corps de l'appareil, est disposé de telle manière qu'il sert de siège (42) pour la soupape d'échappement (40, 42) du robinet relais (6).

2. Dispositif selon la revendication 1, caractérisé en ce que le piston de freinage de secours (43), guidé dans la partie inférieure (5) du corps, est disposé entre le piston relais (38) et le dispositif d'asservissement en fonction de la charge.

3. Dispositif selon la revendication 1, caractérisé en ce que le poussoir (36) déplaçable en fonction de la charge est guidé coaxialement à travers le piston de freinage de secours (43).

4. Dispositif selon la revendication 1, caractérisé en ce que le piston de réglage de la pression de freinage (9, 10) est un piston étagé constitué d'un piston (9) et d'un diaphragme (10) solidaire du piston (9) et présentant une face utile variable, le côté supérieur du piston étagé pouvant être soumis à l'action de la pression de commande de freinage.

5. Dispositif selon les revendications 1 et 2, caractérisé en ce que l'action de la pression de commande de freinage sur le côté supérieur (18) du diaphragme (10) du piston de réglage de la pression de freinage (9, 10) peut être supprimée par le fonctionnement d'une soupape pilote (3) prévue en amont.

6. Dispositif selon la revendication 5, caractérisé en ce que la soupape pilote (3) est disposée coaxialement au-dessus du robinet (4) de réglage de la pression de freinage.

7. Dispositif selon la revendication 1, caractérisé en ce qu'un second clapet double (40) est prévu comme clapet commun pour les soupapes d'admission et d'échappement (40, 42; 40, 41) du robinet relais (6).

8. Dispositif selon la revendication 1, caractérisé en ce que le piston relais (38) peut être sollicité dans le sens de l'ouverture du robinet relais (6) par la pression de départ, réglée en fonction de la charge, du piston de réglage (9, 10) et peut sollicité en sens contraire par la pression envoyée aux cylindres de frein de roue.

9. Dispositif selon au moins l'une des revendications précédentes, caractérisé en ce que le poussoir (36) déplaçable en fonction de la charge est guidé coaxialement par le second clapet double (40, 40a, 40b) du robinet relais (6).

10. Dispositif selon au moins l'une des revendications précédentes, caractérisé en ce que le piston de freinage de secours (43) sert de siège (42) pour le second clapet double (40).

11. Dispositif selon au moins une des revendications précédentes, caractérisé en ce que le second clapet double (40) est guidé à joint étanche dans le piston de freinage de secours (43).

12. Dispositif selon au moins une des revendications précédentes, caractérisé en ce que le second clapet double (40) est guidé à joint étanche, par une portion (40a) en forme de douille, dans une pièce annulaire de piston (44) disposée entre cette portion en forme de douille (40a) et le piston de freinage de secours (43).

13. Dispositif selon au moins une des revendications précédentes, caractérisé en ce que le second clapet double (40) est précontraint dans le sens de la fermeture de la soupape d'admission (40, 42) du robinet relais (6) par un ressort (45) placé entre une portion discoïde (40b) du second clapet double (40) et une pièce de piston annulaire (44).

14. Dispositif selon au moins une des revendications précédentes, caractérisé en ce qu'un orifice de raccordement supplémentaire (48) du corps de l'appareil, sur lequel est branchée la conduite d'alimentation en air comprimé de la remorque, établit une liaison avec l'orifice de raccordement (47) du corps menant au réservoir à air comprimé en passant par un joint annulaire à lèvre (46) monté entre le piston de freinage de secours (43) etle corps (5) et s'ouvrant dans une direction d'écoulement.

**Claims**

1. Load-dependent brake-force regulating device for pneumatically operated trailer brake systems, comprising the following features:

a) the brake-force regulating device contains a brake-pressure regulating piston (9, 10);

b) a brake-pressure regulating valve (4) is associated with the brake-pressure regulating piston (9, 10), and comprises an inlet valve (11, 13) and an outlet valve (11, 37);

c) a first double valve body (11) lacated in the brake-pressure regulating piston (9, 10), together with a valve seat (13) provided on the regulating piston (9), forms the inlet valve (11, 13);

d) the first double valve body (11), together with the upper surface (37) of a tappet (36), which is provided with an axial vent channel and is axially adjustable in dependence on the vehicle load, forms the outlet valve (11, 37), it being possible for the first double valve body (11) to be lifted from its seat (13) with the aid of the tappet (36), while simultaneously blocking the vent channel;

e) a relay valve (6) located in the same housing, downstream of the brake-pressure regulating valve (4), produces the connection between the trailer reservoir and the wheel-brake cylinders, via an inlet valve (40, 42), while an outlet valve (40, 41) is provided for venting the trailer brake system;

f) the relay valve (6) can be operated by a relay piston (38) arranged coaxially under the regulating piston (9, 10);

g) the tappet (36), which can be adjusted in dependence on the load, is guided coaxially through the relay piston (38) in such a manner as to produce a seal, characterised by the following features:

h) an emergency brake piston (43) guided in the lower part (5) of the housing is arranged in such a manner that it serves as a valve seat (42) for the outlet valve (40, 42) of the relay valve (6).

2. Load-dependent brake-force regulating device according to claim 1, characterised by the following feature:

the emergency brake piston (43) guided in the lower part (5) of the housing is located between the relay piston (38) and the load-dependent adjusting device.

3. Load-dependent brake-force regulating device according to claim 1, characterised by the following feature:

the tappet (36), which is adjustable in dependence on the load, is guided coaxially through the emergency brake piston (43).

4. Load-dependent brake-force regulating device according to claim 1, characterised by the following feature:

there is provided as the brake-pressure regulating piston (9, 10) a step piston comprising a piston (9) and a membrane (10), which is connected to the piston (9) and has a variable effective area, the top of which step piston can be subjected to the brake control pressure.

5. Load-dependent brake-force regulating device according to claims 1 and 2, characterised by the following feature:

the subjection of the top (18) of the membrane (10) of the brake-pressure regulating piston (9, 10) to the brake control pressure can be interrupted by the action of an upstream control valve (3).

6. Load-dependent brake-force regulating device according to claim 5, characterised by the following feature:

the upstream control valve (3) is arranged coaxially above the brake-pressure regulating valve (4).

7. Load-dependent brake-force regulating device according to claim 1, characterised by the following feature:

a second double valve body (40) is provided as a common valve member for the inlet and outlet valves (40, 42; 40, 41) of the relay valve (6).

8. Load-dependent brake-force regulating device according to claim 1, characterised by the following feature:

the relay piston (38) can be subjected in the opening direction of the relay valve (6) to the output pressure of the regulating piston (9, 10), set in dependence on the load, and, in the opposite direction, to the pressure output to the wheel-brake cylinders.

9. Load-dependent brake-force regulating device according to at least one of the preceding claims, characterised by the following feature:

the tappet (36), which is adjustable in dependence on the load, is guided coaxially through the second double valve body (40, 40a, 40b), of the relay valve (6).

10. Load-dependent brake-force regulating device according to at least one of the preceding claims, characterised by the following feature:

the emergency brake piston (43) serves as a valve seat (42) for the second double valve body (40).

11. Load-dependent brake-force regulating device according to at least one of the preceding claims, characterised by the following feature:

the second double valve body (40) is guided in the emergency brake piston (43) in such a manner as to produce a seal.

12. Load-dependent brake-force regulating device according to at least one of the preceding claims, characterised by the following feature:

the second double valve body (40) together with a sleeve-like extension (40a) is guided, in such a manner as to produce a seal, in a piston ring member (44) located between this sleeve-like extension (40a) and the emergency brake piston (43).

13. Load-dependent brake-force regulating device according to at least one of the preceding claims, characterised by the following feature:

the second double valve body (40) is prestressed in the closing direction of the inlet valve (40, 42) of the relay valve (6) by means of a spring (45) located between a plate-like extension (40b) of the second double valve body (40) and the piston ring member (44).

14. Load-dependent brake-force regulating device according to at least one of the preceding claims, characterised by the following feature:

an additional housing connection (48), connected to the trailer supply line, produces, via a lip ring (46) which is located between the emergency brake piston (43) and the housing (5) and opens in one direction of flow, a connection to the housing connection (47) leading to the reservoir.

Brems=
leitung

Brems=
zylinder

Vorrats=
leitung

Vorrats=
behälter